Europäisches Patentamt

European Patent Office

Office européen des brevets

(11) Publication number: **0 005 880**
A1

(12) **EUROPEAN PATENT APPLICATION**

(21) Application number: **79200251.1**

(22) Date of filing: **22.05.79**

(51) Int. Cl.²: **B 23 K 1/00**
**B 23 K 1/12, B 23 K 1/18**
**B 23 K 37/00**

(30) Priority: **25.05.78 IT 2378178**
**22.03.79 IT 2120079**

(43) Date of publication of application:
**12.12.79 Bulletin 79/25**

(84) Designated Contracting States:
**DE FR GB IT SE**

(71) Applicant: **Industrie Riunite Eurodomestici S.p.A.**
**26, Viale Guido Borghi**
**I-21025 Comerio (Varese)(IT)**

(84) Designated Contracting States:
**IT**

(71) Applicant: **N.V. Philips' Gloeilampenfabrieken**
**Emmasingel 29**
**NL-5611 AZ Eindhoven(NL)**

(84) Designated Contracting States:
**DE FR GB SE**

(72) Inventor: **Baldi, Marco**
**c/o INT. OCTROOIBUREAU B.V. Prof. Holstlaan 6**
**NL-5656 AA Eindhoven(NL)**

(72) Inventor: **Nidetzky, Leopold**
**c/o INT. OCTROOIBUREAU B.V. Prof. Holstlaan 6**
**NL-5656 AA Eindhoven(NL)**

(74) Representative: **Hartung, Erwin Edgar**
**INTERNATIONAAL OCTROOIBUREAU B.V. Prof.**
**Holstlaan 6**
**NL-5656 AA Eindhoven(NL)**

(54) **Method of and apparatus for welding together pieces constructed of metals of high thermal and electrical conductivity.**

(57) Method of and apparatus for welding elements constructed in a metal of high thermal and electrical conductivity, an element to be welded being placed in contact with at least one electrode of a material, the electrical resistance of which decreases as the temperature increases, connecting the electrode to a current supply source, and passing a current through the electrode, said electrode being heated by the Joule effect, the heat generated in the electrode being transferred by conduction to the element to be welded.

Fig.1

EP 0 005 880 A1

1-III-PH I 78-010ᶜ

Method of and apparatus for welding together pieces constructed of metals of high thermal and electrical conductivity.

This invention relates to a method of welding together pieces constructed of metals, which can be different, but which have high thermal and electrical conductivity.

Although the invention can be applied to many fields, those of particular interest are a) joining a copper tube to an aluminium tube, for example in the refrigeration circuit of a domestic refrigerator, and b) sealing the copper tube through which the refrigerant fluid is charged into the refrigeration circuit of a domestic refrigerator. In case a), the copper tube can be the capillary tube and the aluminium tube the evaporator and/or the suction tube of the compressor in the circuit. The capillary tube is that element of the refrigeration circuit in which the (theoretically isenthalpic) expansion occurs of the liquid refrigerating fluid which leaves the condenser  to then enter the evaporator. As the undercooling of the capillary tube increases the useful effect of the refrigeration circuit, it is usual to insert a portion of the capillary tube in said suction tube. It is therefore necessary to make at least one joint at the point in which the capillary tube enters the suction tube. A further joint is usually necessary at the point in which the capillary tube enters the evaporator, particularly if this latter is in the form of a tubular coil. As it must be ensured that the

0005880

refrigeration circuit is absolutely hermetically sealed, the quality of the joints must be excellent, in spite of the difficulties due to the fact that the two pieces to be joined together are different from each other, and have such a high electrical conductivity that it is impossible to make the joint by conventional resistance welding.

Again with reference to case a), a jointing system is known which uses a short auxiliary copper tube having an outer diameter intermediate between the diameter of the capillary tube and the diameter of the aluminium tube. The capillary tube passes through said auxiliary tube, and is joined to one end thereof by torch brazing. The other end of the auxiliary tube is joined to the aluminium tube by further brazing or by pressure welding. This jointing system is certainly of good quality, but is relatively complicated and above all costly because of the copper construction of said auxiliary tube. The absolute value of this cost is very high when, in a modern industry, daily production amounts to several thousands of refrigerators.

With regard to case b), in the known method the copper charging tube is firstly closed by mechanical deformation using a clamp, and then, with the clamp applied, it is filled from its open end with a brazing material melted by means of a torch. This method has the disadvantage of not completely ensuring the opening of the welding zone, requiring the use of specialised labour and involving the use of a large quantity of brazing material when related to a daily production of several thousands of refrigerators.

The object of the present invention is to provide a new welding method, in particular for joining a copper capillary tube to an aluminium tube, and for closing the end of the charging tube of a refrigeration circuit, in which low cost and simplicity of operation are attained together with excellent weld quality.

According to the method of the invention, a piece to be welded is placed in contact with at least one electrode having a negative temperature coefficient so as

0005880

to receive the heat energy developed in it when it is connected to a source of electricity.

In a preferred embodiment of the method according to the invention, the piece or pieces to be welded together are placed in contact with a pair of electrodes having a negative temperature coefficient so as to establish electrical continuity between these electrodes and receive the heat energy which is developed in these latter as a consequence of establishing electrical continuity.

The term "electrode having a negative temperature coefficient" indicates an electrode, the electrical resistance of which decreases as the temperature increases.

The heat transmitted by the electrode or electrodes to the piece or pieces melts the welding material in contact with the piece, or at least transforms the piece into its plastic state so that, in this latter case, it is sufficient for the electrodes to exert a low pressure on the piece to form the weld.

The apparatus which enables the method to be carried out and is also part of the invention comprises at least one electrode of negative temperature coefficient, and means for connecting it to a source of electricity.

In the preferred embodiment of the apparatus, the means for connecting it to the source of electricity comprise the actual piece or pieces on which the electrode is to act.

In the most advantageous embodiment of the invention, the apparatus comprises a pair of electrodes of negative temperature coefficient, which are mobile substantially in the same plane but in opposite directions, and between which are gripped the piece or pieces to be welded, these latter being utilised as the electrical connection means.

All the characteristics and advantages of the present invention will be apparent from the description given hereinafter (which, as a non-limiting example of application of this method, relates both to joining a copper capillary tube to an aluminium suction tube of the

refrigeration circuit of a domestic refrigerator by brazing, and to sealing the end of the charging tube of such a refrigeration circuit) and from the accompanying drawing, in which:

Figure 1 is a sectional diagrammatic view, through their axes, of two tubes during the operations involved in their joining;

Figure 2 is a cross-section through said tubes on the line II-II of Figure 1 after the joint has been completed and the electrodes used have been removed;

Figure 3 shows the electrical circuit used for melting the brazing material;

Figure 4 shows the variations in the current intensity through the suction tube and its temperature adjacent to the electrodes during the joining by brazing;

Figure 5 is a side view of the apparatus for welding (sealing) the charging tube of a refrigeration circuit;

Figure 6 is a section on the line VI-VI of Figure 5, and

Figure 7 shows a portion of the charging tube after its sealing.

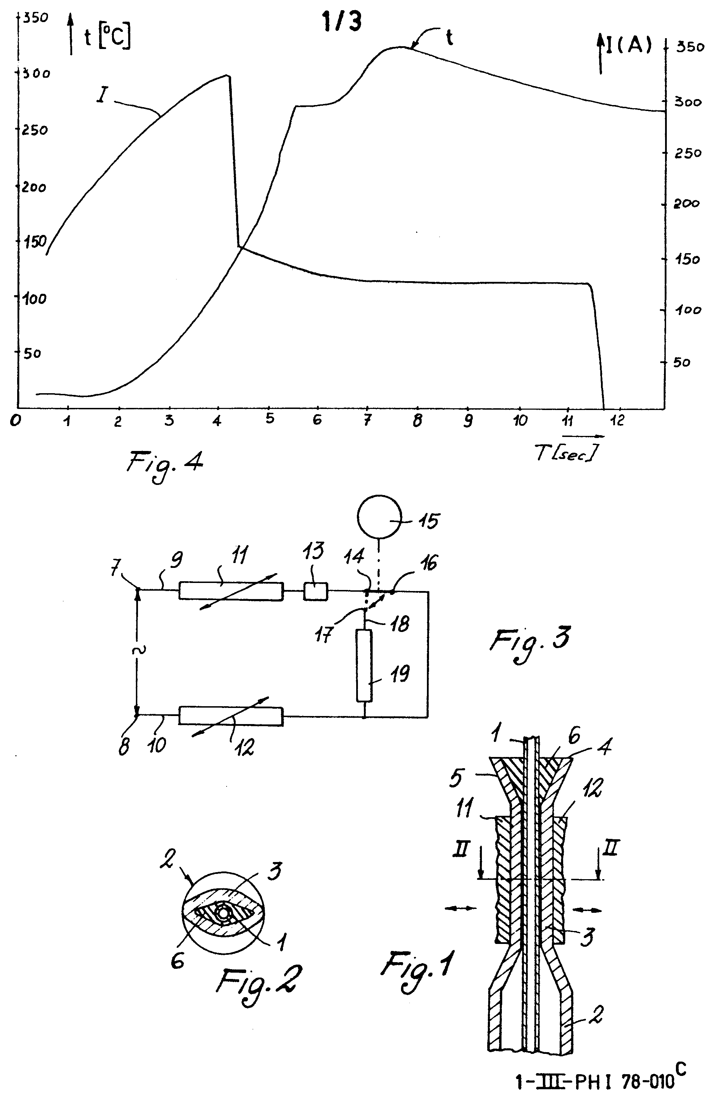

With reference to Figures 1 and 2, a copper capillary tube 1 is inserted directly into a portion of an aluminium tube 2, for example representing the tube which constitutes the evaporator of a refrigeration circuit of a domestic refrigerator. There is thus a first great financial advantage in eliminating the aforesaid auxiliary copper tube. The aluminium tube 2 can have an outer diameter of 10 mm (against the 2 mm of the capillary tube 1), and has previously been mechanically deformed over a small portion 3 just after the mouth 4 to provide a flare 5 and a double lobed section at said portion 3 (see Fig. 2). The brazing material and its de-oxidising agent are placed in the flare 5. These substances are indicated together by the reference numeral 6. The brazing material tried by the applicant in the example of the application of the method described here was the alloy known commercially as "Soldamoll 265" of Messrs. Degussa (the alloy carries the
symbol L-CdZn 20, in accordance with DIN 1707). This
is a eutectic cadmium-zinc alloy with 82.5% of cadmium and
a melting point of 266°C. The de-oxidising agent tried was
"Soldaflux AL" of Messrs. Degussa (carrying the symbol
F-LW 3, in accordance with DIN 8511), its action being
effective over the temperature range of 200 to 300°C.

          According to the invention, the high conductivity of the aluminium with which the tube 2 is made is
utilised to melt the brazing material. Thus the aforesaid
technical and economical drawbacks due to the use of torch
brazing are obviated. For this purpose, an electrical
circuit (shown diagrammatically in Fig. 3) is constructed
comprising the terminals 7 and 8 which receive an alternating single phase current from the secondary winding of a
voltage step-down transformer (not shown), supply cables
9 and 10, and a pair of electrodes 11 and 12 of a material
such as graphite which has a negative temperature coefficient. By the Joule effect, the electrical energy at the
electrodes 11 and 12 is transformed into heat which reaches
the brazing material by conduction through the tube 2. These
electrodes are brought into contact with the portion 3 of
the tube 2 at the beginning of brazing. In the electrical
circuit diagram of Fig. 3, the electrodes are shown as two
variable resistors with the said reference numerals 11 and
12, whereas the reference numeral 13 indicates the
resistance, obviously of extremely low value, of the tube
2 through which the circuit is made. The circuit also
comprises a switch 14 which, according to the control
signals which it receives from the regulator 15, can be
shifted from the contact 16 to the contact 17 to connect
into the circuit a secondary branch 18 which comprises a
high ohmic resistor 19.

          The regulator 15 can be any device able to
cause said resistor 19 to be connected in series with the
electrodes 11 and 12 and tube 2 when the brazing material
has reached its melting point, so reducing the current
intensity 1 in the electrical circuit. In this respect, the applicant has found that this gives an energy saving because the absorbed power of the circuit can be reduced by as much as 75% during the second brazing stage (i.e. when the switch 14 is closed on the contact 17) with respect to the first stage (i.e. when the switch 14 is closed on the contact 16). Advantageously, said regulator 15 is a rapid response thermostat, the sensor of which determines the temperature of the aluminium tube 2 in the immediate vicinity of the point in which it is joined to the capillary tube 1. However, the regulator 15 can be in the form of a timer, provided it is known accurately after what time from the beginning of the operation the timer must shift the switch 14 from the contact 16 to the contact 17 (on the basis of an accurate trial run of the brazing operation).

The variation in current intensity I (measured in amperes) passing through the tube 2 during brazing, and the variation in temperature in $^{\circ}C$ of this tube ( which can be sprayed with a conventional coolant after brazing) shown in Figure 4 have been obtained by tests carried out by the applicant.

After the brazing material has melted, the electrodes 11 and 12 are removed from contact with the portion 3 of the tube 2, so that it is possible to remove this latter (now joined to the capillary tube 1) and proceed to a further brazing operation. In Figure 1 the approach and withdrawal of the tube electrodes are shown by arrows.

Finally, it should be noted that in this example the electrodes do not exert any mechanical deformation action on the pieces to be joined together ( the tubes 1 and 2 in this example). Thus(also because of the fact that the material of which the electrodes are made has a negative temperature coefficient, i.e. its electrical resistance decreases as its temperature increases) the method described herein is conceptually the opposite of conventional resistance welding of ferrous metals, which have a relatively high thermal and electrical conductivity.

The advantages of the method according to the present invention can be summarised as follows: pieces made of materials of high electrical and thermal conductivity can be joined together by brazing other than torch brazing, and thus more simple to carry out and of much higher reliability; the energy consumption can be considerably reduced by not supplying excess energy when this is not required; in the particular case of joining a capillary tube to an aluminium tube, it is no longer necessary to use an intermediate auxiliary tube.

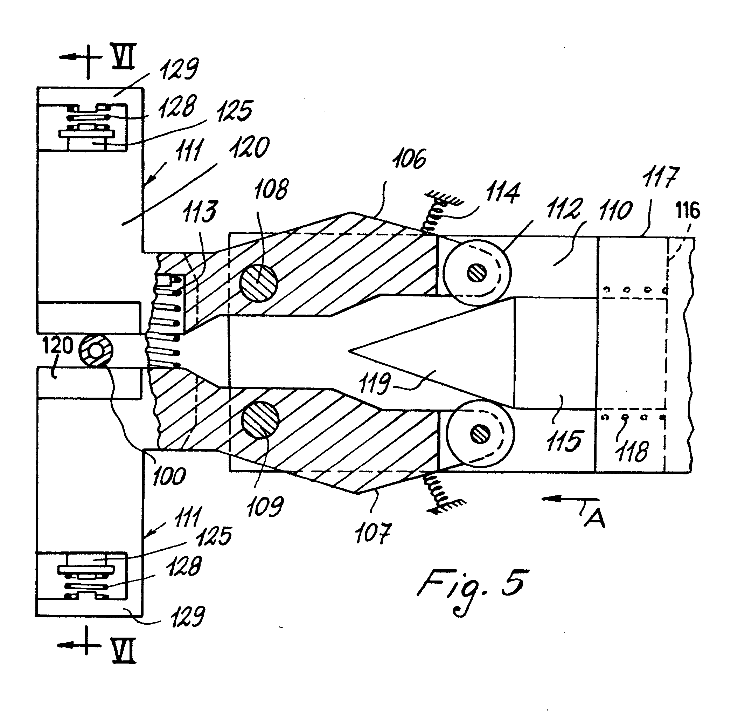

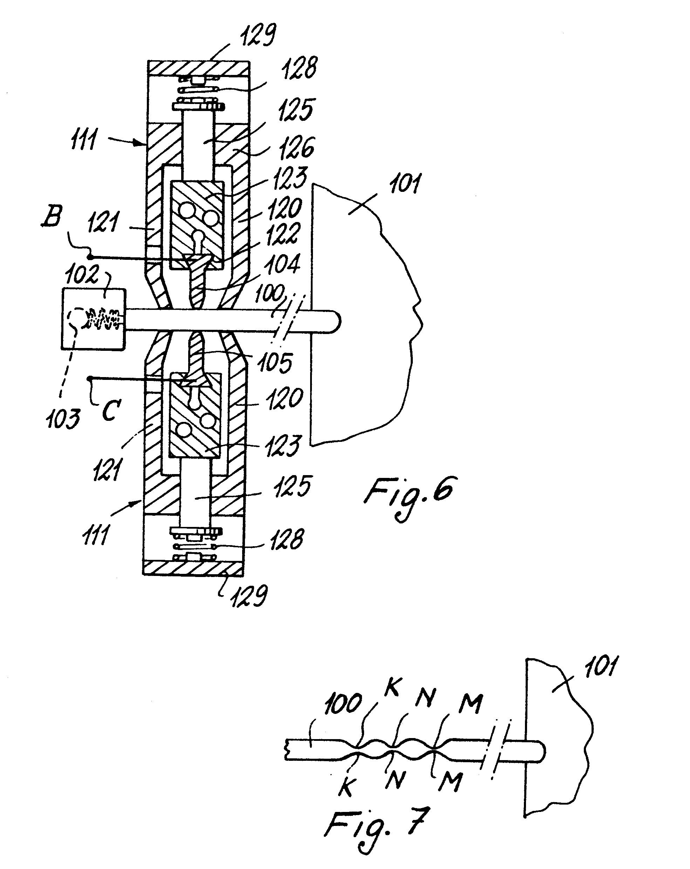

With reference to Figures 5 to 7, which show the sealing of the tube for charging the refrigeration circuit of a domestic refrigerator with refrigerant fluid, the tube in question, constructed for example of copper, is indicated by the reference numeral 100. It is welded to the casing 101 which contains the compressor and its electrical drive motor (not shown), and communicates with the casing interior.

In order to introduce the refrigerant fluid, a connector element 102 incorporating a non-return valve 103 is mounted on the free end of the tube 100 by well known methods. Again by well known methods, a charging pistol is connected to the connector element, and when operated causes pressurised refrigerant fluid to flow into the circuit. After the charging operation, the pistol is disconnected from the connector element, and the circuit then contains pressurised refrigerant fluid which cannot escape because of the non-return valve 103.

The problem solved by the invention is to properly seal the tube 100 after said charging operation, without using welding material.

According to the invention, the problem is solved by causing localised plasticising or fusion of the charging tube, mainly by the heat given up by electrodes 104, 105 of negative temperature coefficient, for example of graphite, which are moderately pressed from opposing sides against the tube and thus cause permanent sealing of the tube by welding as a result of the plasticising or

fusion.

Advantegeously, to prevent the pressurised refrigerant fluid in the circuit from being able to escape through the passages which can open up in the plasticising or fusion zone, the tube is closed before welding and maintained closed during welding, by mechanical deformation exerted in a zone between the electrodes 104, 105 and the casing 101, and optionally also in a zone between the electrodes and the free end of the charging tube.

The said operations are carried out by the device shown in Figures 5 to 7, comprising electrodes 104, 105 and means for localised temporary mechanical closure of the tube.

The device in question comprises a pair of levers 106, 107 rotatable about their pivots 108, 109, and supported at their ends in a pair of parallel fixed side plates 110.

Each lever 106, 107 comprises at one end a working head 111 in which the electrode 104, 105 is disposed, and at the other end a roller 112 which, urged by springs 113, 114, is kept in contact with the end of a rod 115 of a piston 116. This piston is slidably mounted in a cylinder 117, and on one of its ends there acts a return spring 118 and on the other end there acts a pressurised fluid fed for example through a solenoid valve, not shown. The end part 119 of the rod 115 is conical so that when the pressurised fluid is fed into the cylinder 117, the consequent movement of the piston 116 in the direction of the arrow A causes the levers 106, 107 to rotate in such a direction as to cause the working heads 111 to approach each other.

These heads comprise a fork structure with a pair of arms 120, 121, the purpose of which is to deform the tube 100 at the two sides of the electrodes 104, 105 when the rod 115 is moved in the direction of the arrow A.

Each electrode 104, 105 is removably housed in a dovetail cavity 122 provided in a partly slotted metal block 123, with ducts 124 for the passage of cooling water fed through flexible hoses, not shown. The block 123 is provided with a shank 125 of polygonal or square cross-section slidable in a bore of corresponding cross-section provided in the crosspiece 126 of the fork structure. The shank 125 comprises a head 127 against which a compression spring 128 acts, its other end resting against a wall 129 rigid with the fork structure.

In the device concerned, the electrical circuit extends from the terminals B and C of an electricity source, through the electrodes 104, 105 and through the tube 100, when this latter is in contact with the electrodes.

The tube and electrodes are therefore in series when the device operates. The circuit is opened when the electrodes 104, 105 withdraw from the tube 100 following the return of the rod 115. Thus the welding operation, which will be discussed in greater detail hereinafter, can be controlled by the operator by operating the valve (e.g. a three-way valve) associated with the cylinder 117.

Operation is as follows:

The two heads 111 are initially spaced apart from each other to allow the insertion of the tube 100 to be sealed (welded). When the tube is disposed between the heads, the operator feeds fluid under pressure to the cylinder 117. The rod 115 moves in the direction of the arrow A, the levers 106, 107 rotate about the pivots 108, 109, and the heads 111 approach the tube 100. The electrodes 104, 105 firstly touch the tube at the point N, but electricity is not as yet fed to the electrical circuit, even though this is ready to receive it. The arms 120, 121 then act on the tube to deform it and close it mechanically in two zones K and M to the sides of the welding point N, this point being where the electrodes act.

The connector element 102 can not be removed. Electricity is now fed to the terminals B, C (e.g. by means of a contact) and flows in the circuit which is closed through the electrodes 104, 105 and tube 100. The electrodes 104, 105 progressively increase in temperature and thus heat point N to a sufficient extent to transform it into its plastic or partly molten state so that the small
pressure which the electrodes exert on the tube (by virtue
of the springs 128) is sufficient to produce deformation
and consequent welding (when the opposing sides of the
tube come into contact with each other).

On termination of welding (sealing), the operator
unloads the cylinder 117, the two heads 111 withdraw from
the tube and as the circuit is broken the electricity no
longer traverses the electrodes 104, 105, which therefore
cease to heat up.

The apparatus is thus ready for a new working cycle.

The present invention covers any other field of
application of the described method, comprising the
joining together of more than two pieces and the
utilisation of the conductivity of all or some of the
metals of which the pieces are constructed, to perform the
welding, i.e. the fusion of the brazing materials.

17.5.1979                                    1                              PHI 78010 C

CLAIMS:

1.          A method of welding together pieces constructed of metals of high thermal and electrical conductivity, wherein a piece to be welded is placed in contact with at least one electrode of negative temperature coefficient, so as to receive the heat energy which is developed therein when it is connected to a source of electricity.

2.          A method as claimed in Claim 1, wherein the piece or pieces to be welded together are placed in contact with a pair of electrodes of negative temperature coefficient, so as to establish electrical continuity between said electrodes and receive the energy which is developed in these latter as a consequence of the establishment of the electrical continuity.

3.          A method as claimed in the preceding Claims, wherein the electrodes are resiliently pressed on to the piece or pieces.

4.          A method as claimed in the preceding Claims, wherein the welding is brazing.

5.          A method as claimed in the preceding Claims, wherein the welding takes place as a result of plasticising.

6.          A method as claimed in Claim 4, which is used for joining together elements of a refrigeration circuit, in particular a capillary tube and a tube of greater diameter.

7.          A method as claimed in Claim 6, wherein the the tube of greater diameter is previously deformed mechanically to provide a seating for the capillary tube, and to form a socket region for receiving the brazing material.

8.      A method as claimed in Claim 4 and in one of the remaining Claims, wherein, at least until the moment in which the brazing material begins to melt, the intensity of the current circulating through the electrodes is kept at a higher value than during the time in which the electrodes are still maintained in contact with at least one of the pieces to be joined together.

9.      A method as claimed in Claim 8, wherein the intensity of the current circulating through the electrodes is decreased for at least part of the time subsequent to the moment in which the brazing material begins to melt, by connecting at least one resistive component in series with the electrodes.

10.     A method as claimed in Claim 5 and one or more of the remaining claims, which is used for sealing a tube of a circuit containing a fluid under pressure.

11.     A method as claimed in Claim 10, wherein the tube is mechanically deformed on both sides of the weld before the weld is made.

12.     An apparatus for carrying out the method as claimed in the preceding Claims, comprising at least one electrode of negative temperature coefficient, and means for connecting it to a source of electricity.

13.     An apparatus as claimed in Claim 12, wherein the means for connecting it to the source of electricity comprise the actual piece or pieces on which the electrode acts.

14.     An apparatus as claimed in Claim 12 and/or 13, comprising a pair of electrodes of negative temperature coefficient which are mobile substantially in the same plane but in opposite directions, and between which the piece or pieces, used as the electrical connection means, are gripped.

15.     An apparatus as claimed in one or more of Claims 12 to 14, comprising a switch for connecting a

0005880

resistive component in series with the electrodes.

16.          An apparatus as claimed in Claim 15, wherein the switch is controlled by a thermostat.

17.          An apparatus as claimed in Claim 14, wherein at least one electrode is mounted resiliently yieldable in a mobile operating head which comprises at least one jaw for deforming the piece, in particular for mechanically closing a tube.

18.          An apparatus as claimed in Claim 17, comprising two mobile heads and control means for moving said heads.

0005880

Fig. 4

Fig. 3

Fig. 2

Fig. 1

1-III-PH I 78-010 C

Fig. 5

Fig.6

Fig. 7

0005880

## EUROPEAN SEARCH REPORT

European Patent Office

Application number

79 20 0251.1

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | DE - A - 1 615 342 (KOBER) <br><br> * totality * <br><br> -- <br><br> DE - A - 2 124 868 (GAZ DE FRANCE) <br><br> * page 6, lines 1 to 3; page 13, claim 8; figure 2 * <br><br> -- <br><br> DE - A1 - 2 631 206 (GENERAL ELECTRIC) <br><br> * page 4, lines 9 to 15 * <br><br> -- <br><br> DD - A - 85 495 (APPEL) <br><br> * column 3, lines 7 to 10; column 4, lines 9 to 12; column 3, lines 35 to 44 and 52; column 4, lines 1 to 4; figures * <br><br> ---- | 1,2,9, 10,12- 16 <br><br><br> 2,3,10 <br><br><br><br> 11 <br><br><br><br> 6,7,18 | B 23 K 1/00 <br> 1/12 <br> 1/18 <br> 37/00 <br><br><br><br><br><br><br><br><br> **TECHNICAL FIELDS SEARCHED (Int.Cl.²)** <br><br> B 23 K 1/00 <br> 1/12 <br> 1/02 <br> 1/04 <br> 11/28 <br> 9/20 <br> 11/10 <br> 11/00 <br> 11/30 <br> 37/00 <br> 1/18 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Vienna | Date of completion of the search <br> 25th July 1979 | Examiner <br> Bencze | |

EPO Form 1503.1  06.78